# EUROPEAN PATENT SPECIFICATION

(11) **EP 2 648 241 B1**
(45) Date of publication and mention of the grant of the patent: **05.04.2017**
(21) Application number: 13162627.7
(22) Date of filing: 05.04.2013
(51) Int. Cl.: H01M 2/02, H01M 2/10, H01M 2/12, B60K 1/04, B60L 11/18, B60L 3/00, H01M 10/04, B60L 11/14, H01M 10/625, H01M 10/643, H01M 10/6554, H01M 10/613, H01M 10/6555, H01M 10/0525

(54) **Method for implementing a system for the storage of electric energy for a vehicle with electric propulsion and having cylindrical chemical batteries arranged in a plastic support matrix**
Verfahren zur Implementierung eines Systems zur Speicherung von elektrischer Energie für ein Fahrzeug mit Elektroantrieb und mit zylinderförmigen, chemischen Batterien in einer Kunststoffträgermatrize
Procédé de mise en 'uvre d'un système de stockage d'énergie électrique pour un véhicule à propulsion électrique et doté de batteries chimiques cylindriques disposées dans une matrice de support en plastique

(30) Priority: 06.04.2012 IT BO20120184
(43) Date of publication of application: 09.10.2013
(73) Proprietor: FERRARI S.p.A., Modena (IT)
(72) Inventor: Favaretto, Fabrizio, 41043 Formigine (IT)
(74) Representative: Boggio, Luigi

(56) References cited:
- EP-A1- 1 662 602
- EP-A1- 2 369 656
- DE-A1-102007 010 742
- DE-A1-102007 010 748
- DE-A1-102008 043 784
- DE-A1-102008 052 284
- DE-A1-102008 059 941
- FR-A1- 2 961 153
- JP-A- H10 106 521
- JP-A- H10 255 735
- US-A1- 2006 214 633
- US-A1- 2012 003 508

## Description

### FIELD OF THE INVENTION

The present invention relates to a method for implementing a system for the storage of electric energy for a vehicle with electric propulsion.

The present invention is advantageously applied in a road vehicle with hybrid propulsion to which the following description will explicitly refer without losing of generality.

### PRIOR ART

A hybrid vehicle comprises an internal combustion heat engine, which transmits the driving torque to the driving wheels through a transmission provided with a gearbox, and at least one electric machine which is mechanically connected to the driving wheels and is electrically connected to a system for the storage of electric energy. Normally, the system for the storage of electric energy comprises a pack of chemical batteries which are connected to each other in series and in parallel.

The placement of the storage system into the vehicle may be very complex, particularly in the case of a high performance sports vehicle which has very small inside spaces. In particular, the storage system must be possibly arranged close to the electric machine to reduce the length of the electric connection cables (i.e. to reduce the weight of the electric cables and the power losses by Joule effect in the electric cables themselves), must be possibly arranged in a position protected from crashes, must be arranged in a position protected from heat sources and that can be easily cooled down as it cannot withstand high temperatures, and must be arranged so as to not unbalance the vehicle balance with its relevant mass (in other words, it must be arranged centrally close to the barycenter and must be arranged close to the ground to obtain a good dynamic behavior of the vehicle).

It has been proposed to arrange the batteries of the storage system at the floor that makes up a bottom wall of the compartment (i.e. to lie the storage system on the floor or insert the storage system into the box-shaped floor). The arrangement of the storage system at the floor offers several advantages, since in this way the storage system is highly protected against crashes being arranged into the safety cell of the compartment, is relatively close to the electric machine, is arranged in a position not subject to overheating and is easy to be cooled down, and is arranged very close to the ground in central position.

However, the useful height for the storage system at the floor is reduced (approximately in the order of few centimeters), particularly in the case of a high performance sports vehicle having a very small overall height from the ground. Accordingly, in order to arrange the storage system at the floor, the chemical batteries of the storage system must have a very small overall thickness; thus, the traditional chemical batteries for motor traction which have a shape similar to the cubic shape (i.e. they have a relevant thickness which is equal to if not higher than the width/length) are not suitable to be arranged at the floor.

Patent application DE102007010742A1 and patent application DE102007010748A1 describe a system for the storage of electric energy for a vehicle comprising a pack of chemical batteries, which are connected to each other in series and in parallel and comprise respective electrochemical cells; each chemical battery has a cylindrical shape having a central (longitudinal) symmetry axis. The chemical batteries are arranged into a parallelepiped container, are vertically oriented and lie on a lower cooling plate which serves as a support base; a plurality of heat conductive bar perpendicularly raise from the cooling plate which bars are arranged between the chemical batteries. The free spaces between the chemical batteries 2 are filled with a plastic substance (in particular, an epoxy resin, polyurethane or silicone) which leaves only the upper part of the chemical batteries exposed at the electric terminals.

Patent application US2012003508A1 describes a system for the storage of electric energy for a vehicle comprising a pack of chemical batteries, which are connected to each other in series and in parallel and comprise respective electrochemical cells. Each chemical battery has a cylindrical shape having a central (longitudinal) symmetry axis. The chemical batteries are arranged into a parallelepiped container, are vertically oriented and lie on a lower cooling plate which serves as a support base. The free spaces between the chemical batteries are filled with a plastic substance (in particular, an electrically insulating foam) which leaves an upper part of the chemical batteries exposed at the electric terminals.

Patent application JPH10106521 describes a storage battery power supply device equipped with cooling blocks made of a material having excellent heat conductivity (for example silicone); the storage batteries are accommodated in battery accommodation holes made in the cooling blocks.

Patent application JPH10106521 represents the closest prior art and discloses a method for implementing a system for the storage of electric energy according to the preamble of independent claim 1.

### DESCRIPTION OF THE INVENTION

The object of the present invention is to provide a method for implementing a system for the storage of electric energy for a vehicle with electric propulsion, which method allows a storage system free from the above-described drawbacks to be easily and cost-effectively obtained.

According to the present invention, a method for implementing a system for the storage of electric energy for a vehicle with electric propulsion is provided according to the appended claims.

### BRIEF DESCRIPTION OF THE DRAWINGS

The present invention will now be described with reference to the accompanying drawings, which show some non-limiting embodiment examples thereof, in which:
- figure 1 shows a diagrammatic plan view of a road vehicle with hybrid propulsion;
- figure 2 shows a diagrammatic plan view of the road vehicle of figure 1 with highlighted a system for the storage of electric energy implemented according to the present invention;
- figure 3 shows a diagrammatic plan, enlarged scale view of a part of the system for the storage of electric energy of figure 2;
- figure 4 shows a diagrammatic sectional view along line IV-IV of a detail of the system for the storage of electric energy of figure 2;
- figure 5 shows a diagrammatic sectional view along line V-V of a detail of the system for the storage of electric energy of figure 2;
- figures 6 and 7 show two diagrammatic plan, enlarged scale views of a part of the system for the storage of electric energy of figure 2 according to two construction variants; and
- figure 8 shows a diagrammatic sectional view of the system for the storage of electric energy of figure 2 according to a different embodiment;
- figure 9 shows a diagrammatic, perspective view of the system for the storage of electric energy of figure 2 according to a further embodiment;
- figure 10 shows a diagrammatic, perspective view of a support matrix made of plastic material of the system for the storage of electric energy of figure 9; and
- figure 11 shows a diagrammatic sectional view of a detail of the system for the storage of electric energy of figure 9.

### PREFERRED EMBODIMENTS OF THE INVENTION

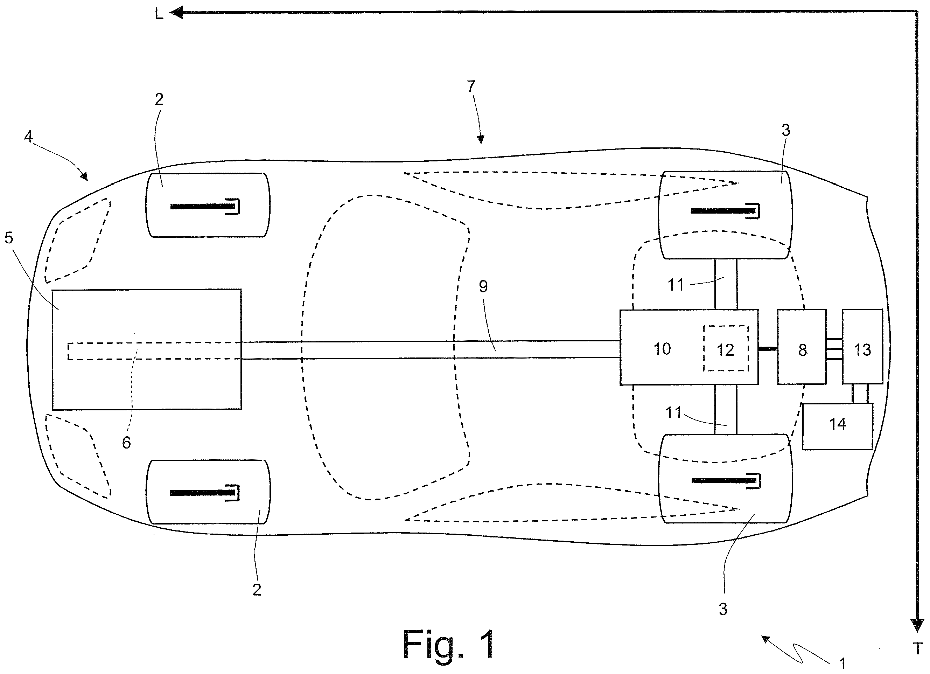

In figure 1, reference numeral 1 indicates as a whole a road vehicle with hybrid propulsion provided with two front wheels 2 and two rear driving wheels 3 which receive the driving torque from a hybrid motor propulsion system 4.

Vehicle 1 has a longitudinal direction L parallel to the direction of the rectilinear motion (i.e. to the direction of motion with null steering angle) and a transverse direction T perpendicular to the longitudinal direction L.

The hybrid motor propulsion system 4 comprises an internal combustion heat engine 5 which is arranged in front position and is provided with a driving shaft 6, an automatic transmission 7, which transmits the driving torque generated by the internal combustion engine 5 to the rear driving wheels 3, and an electric machine 8 which is mechanically connected to transmission 7 and is reversible (i.e. it can work both as an electric motor, absorbing electric energy and generating a mechanical driving torque, and as electric generator, absorbing mechanical energy and generating electric energy).

Transmission 7 comprises a drive shaft 9 which on one side is angularly integral to driving shaft 6 and on the other side is mechanically connected to a dual clutch gearbox 10, which is arranged in rear position and transmits the motion to the rear driving wheels 3 by means of two axle shafts 11 which receive the motion from a differential gear 12. The main electric machine 8 is mechanically connected to gearbox 10 and in particular, it is angularly integral to a primary shaft of gearbox 10; as regards the methods of connecting the main electric machine 8 to the dual clutch gearbox 10, reference will be made, for example, to the description of patent application EP2325034A1.

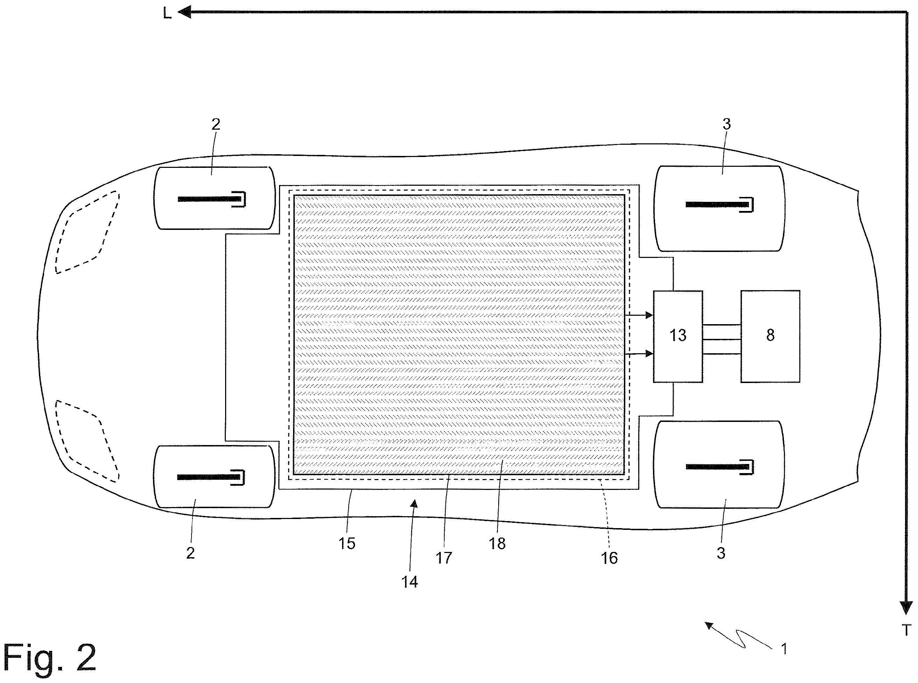

As shown in figure 2, road vehicle 1 is provided with a frame comprising a floor 15 (partially and schematically shown in figure 2) which makes up a bottom wall of the compartment; a housing 16 is obtained in floor 15 which houses the storage system 14 and thus, the storage system 14 lies on floor 15. When the frame is made of metal, the floor is welded or screwed to the frame while when the frame is made of a composite material, the floor is monolithic (i.e. entirely integrated) with the frame.

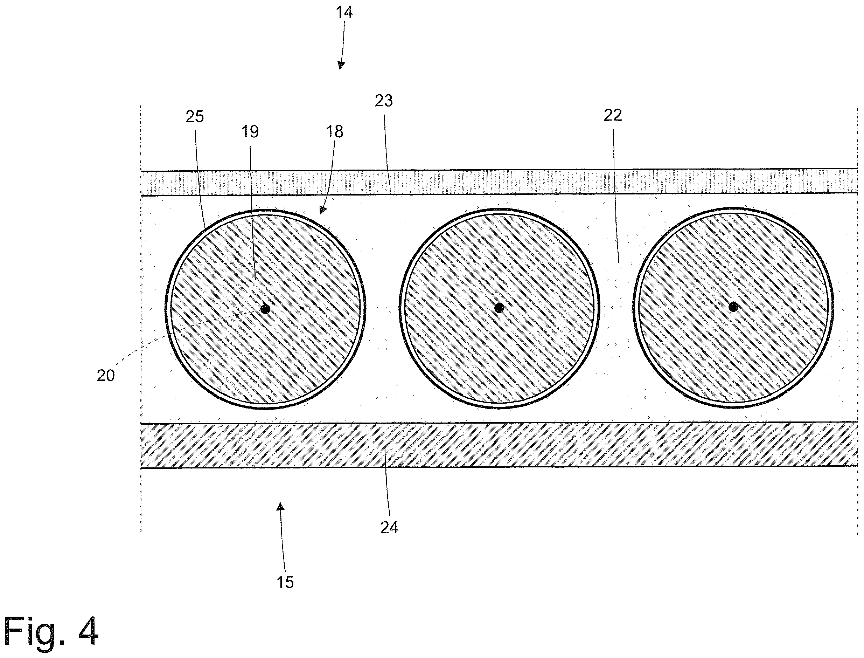

Storage system 14 may comprise a container 17 (typically made of plastic material which is thermally conductive and electrically insulating) having a parallelepiped shape, which is inserted into housing 16 (i.e. lies directly onto floor 15). Moreover, the storage system 14 comprises a pack of chemical batteries 18, which are housed into container 17, are connected to each other in parallel and/or in series and comprise respective electrochemical cells 19 (schematically shown in figures 4, 5 and 8) which are adapted to convert the chemical energy stored into electric energy and vice versa. According to a preferred embodiment, the electrochemical cells 19 are lithium-ion ("Li-Ion") ones.

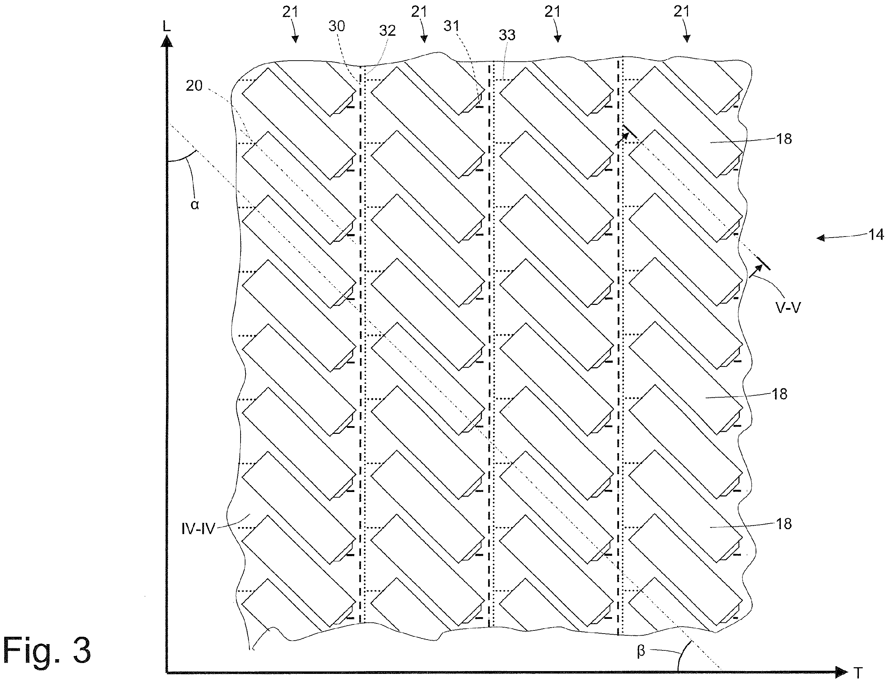

As shown in figures 3, 4 and 5, each chemical battery 18 has a cylindrical shape having a central symmetry axis 20.

The storage system 14 is shaped so as to be fitted inside vehicle 1 in such a way that the central symmetry axis 20 of each chemical battery 18 is not parallel either to the longitudinal direction L of vehicle 1 or to the transverse direction T of vehicle 1.

In the embodiment shown in figures 3, 4 and 5, the chemical batteries 18 are horizontally arranged (i.e. with the central symmetry axes 20 horizontal and parallel to floor 15) and the central symmetry axis 20 of each battery forms an acute angle α with the longitudinal direction L of vehicle 1 and forms an acute angle β with the transverse direction T of vehicle 1. In the embodiment shown in figures 3, 4 and 5, angles α and β are identical to each other and are equal to 45°; it is clear that according to alternative embodiments not shown, angles α and β may be different from each other (for example, angle α may be equal to 30° and angle β may be equal to 60° or vice versa).

In the embodiment shown in figures 3, 4 and 5, the chemical batteries 18 are all parallel to each other and thus they all have the same orientation with respect to the longitudinal direction L and to the transverse direction T of vehicle 1 (i.e. all the central symmetry axes 20 of the chemical batteries 18 form a same acute angle α with the longitudinal direction L of vehicle 1 and they all form the same acute angle β with the transverse direction T of vehicle 1).

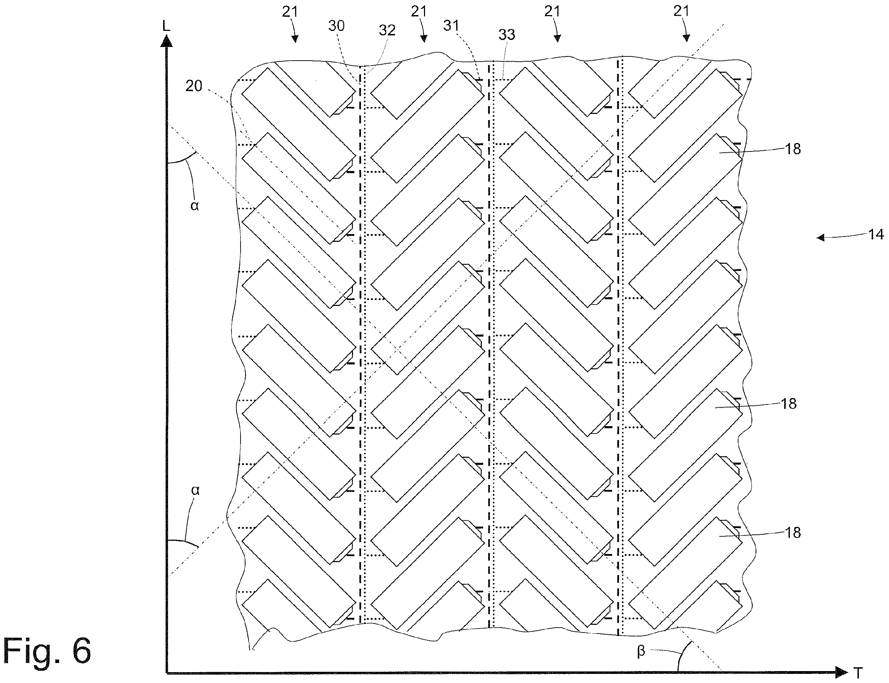

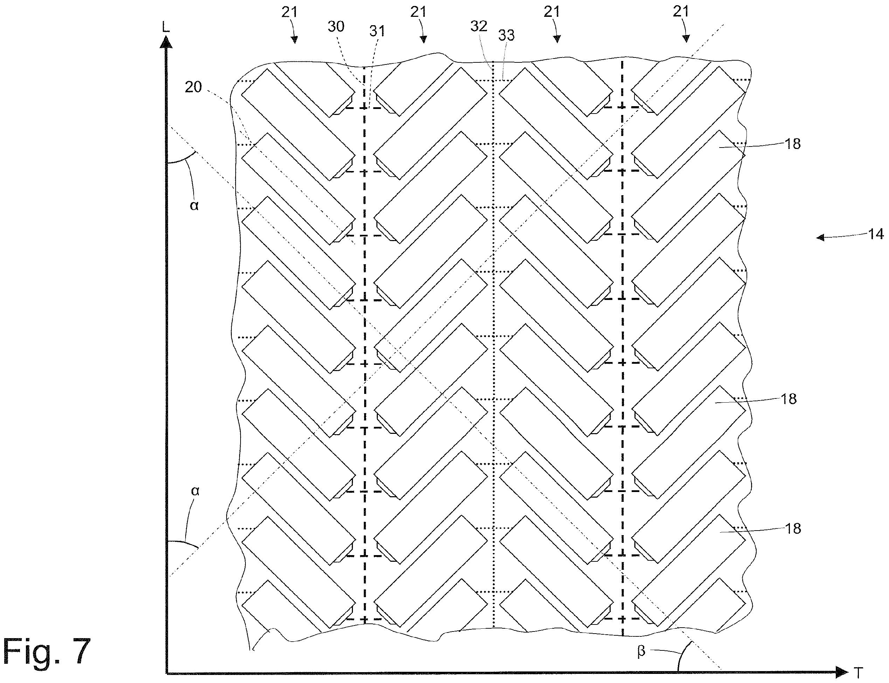

In the embodiment shown in figures 6 and 7, the chemical batteries 18 have two different orientations with respect to the longitudinal direction L and to the transverse direction T of vehicle 1. In particular, the chemical batteries 18 of each row 21 are arranged perpendicular to the chemical batteries 18 of the adjacent rows 21; i.e. the central symmetry axes 20 of the chemical batteries 18 of each row 21 are arranged perpendicular to the central symmetry axes 20 of the chemical batteries 18 of the adjacent rows 21.

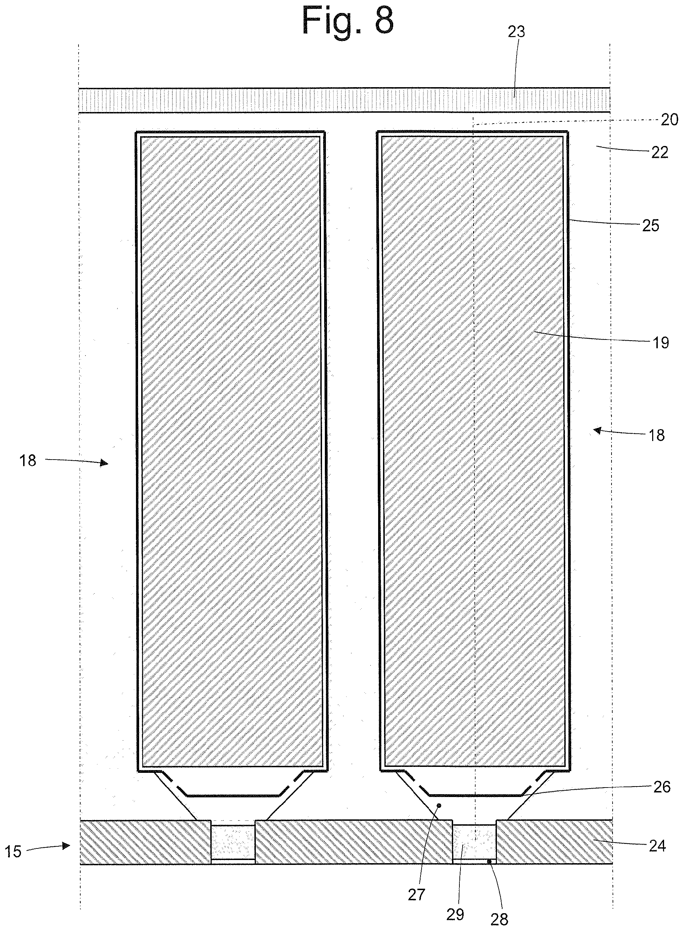

In the embodiment shown in figure 8, the chemical batteries 18 are vertically arranged (i.e. with the central symmetry axes 20 vertical and perpendicular to floor 15) and the central symmetry axis 20 of each chemical battery 18 is perpendicular to both the longitudinal direction L of vehicle 1 and to the transverse direction T of vehicle 1.

Preferably, the chemical batteries 18 are arranged in rows 21 parallel to each other. In the embodiment shown, the pack of chemical batteries 18 has a single layer of chemical batteries 18 (i.e. no chemical battery 18 has another chemical battery 18 arranged on top or beneath it); in other words, all the chemical batteries 18 (substantially) have the same vertical height. According to a different embodiment not shown, the pack of chemical batteries 18 has two or more layers of chemical batteries 18 arranged on top of each other.

As shown in figures 4, 5 and 8, the storage system 14 comprises a support matrix 22 made of plastic material, inside of which the chemical batteries 18 are arranged, which chemical batteries 18 are at least partially covered by the support matrix 22 itself.

According to a preferred embodiment, container 17 and the support matrix 22 have an adjusted mechanical strength so as to get deformed (typically with more or less extended breaks) in case of crash. In other words, container 17 and the support matrix 22 are sized to have a sufficiently high mechanical strength (with an adequate safety margin) to withstand the stresses of the standard drive (either resulting from accelerations or from vibrations), but not sufficiently high to withstand the stresses that occur in case of crash (obviously of a certain seriousness, not for example a simple rear-ending at low speed). In any case, it is essential for the mechanical strength of container 17 and of the support matrix 22 to be (significantly) smaller than the mechanical strength of the single chemical batteries 18, since in case of serious crash it is admissible (or, it is desirable) if container 17 and the support matrix 22 get deformed (normally breaking up), but leaving the single chemical batteries 18 entire. In the practice, container 17 and the support matrix 22 have an adjusted mechanical strength which is lower than the mechanical strength of the single chemical batteries 18 so that in case of crash, container 17 and the support matrix 22 collapse by getting deformed while the single chemical batteries 18 remain entire and are displaced with respect to container 17 and to the support matrix 22.

In case of crash which deforms the frame of vehicle 1 (and thus, floor 15), the storage system 14 which lies on floor 15 is also deformed and thus tends to get compressed; in this situation, thanks to the fact that container 17 and the support matrix 22 have a "moderate" mechanical strength, container 17 and the support matrix 22 get deformed (normally by breaking up) by getting deformed, thus allowing the deformation of the storage system 14 as a whole; two advantageous effects are obtained in this way: on the one hand, the storage system 14 does not make up a local stiffening of the frame of vehicle 1 which prevents or in any case hinders the controlled deformation of the frame itself (the controlled deformation of the frame is essential to absorb the crash energy without subjecting the vehicle passengers to hazardous decelerations), and on the other hand the single chemical batteries 18 are not subjected to destructive mechanical stresses (i.e. they remain substantially entire) since only container 17 and the support matrix 22 which get deformed cause a displacement (but not a breakage) of the single chemical batteries 18.

To this end, we should note the importance of the fact that the central symmetry axis 20 of each chemical battery 18 is not parallel to the longitudinal direction L of vehicle 1 neither to the transverse direction T of vehicle 1. In this way, in case of front or lateral crash of vehicle 1, the chemical batteries 18 do not tend to "jib" against the crash (i.e. they are not loaded at the tip and thus they do not tend forming "beams" arranged parallel to the direction of the crash and which act as very rigid "struts"), on the contrary, the chemical batteries 18 tend to disperse without opposing any significant resistance to the crash (i.e. without creating any lines of resistance to the crash). The cylindrical shape of the chemical batteries 18 tends to promote the reciprocal sliding of the chemical batteries 18 on each other (i.e. a chemical battery 18 during its lateral displacement tends to roll on the adjacent chemical battery 18 rather than jamming against the adjacent chemical battery 18), further reducing the risk of jibbing. In this way, the two advantageous effects mentioned above are obtained: on the one hand, the storage system 14 does not make up a local stiffening of the frame of vehicle 1 which prevents or in any case hinders the controlled deformation of the frame itself, and on the other hand the single chemical batteries 18 are not subjected to destructive mechanical stresses (i.e. they remain substantially intact).

Preferably, the support matrix 22 is made of a plastic material which is thermally conductive and electrically insulating; in this way, the support matrix 22 allows the heat that is produced into the chemical batteries 18 to be transmitted to the outside and at the same time ensures an optimal electric insulation to the pack of chemical batteries 18. According to a preferred embodiment shown in figures 4, 5 and 8, a cooling plate 23 may be provided, which lies on a surface of the support matrix 22 and is thermally connected to a cooling system to evacuate the heat produced by the chemical batteries 18. For example, the cooling plate 23 may be made of a metal material having a high thermal conductivity and may be provided with channels (arranged on the opposite side of the support matrix 22) through which a cooling liquid is forcedly circulated.

According to the preferred embodiment shown in figures 4, 5 and 8, the cooling plate 23 lies (in particular, packed to increase the contact surface and thereby the heat exchange) on an upper surface of the support matrix 22; a lower surface of the support matrix 22, on the other hand, lies (in particular, packed to increase the contact surface and thereby the heat exchange) on floor 15 (and preferably on a bottom panel 24 of floor 15). The outside environment is beneath the bottom panel 24 of floor 15 which makes up the support surface for the storage system 14 and when the road vehicle 1 is moving, the bottom panel 24 of floor 15 is constantly lapped by the aerodynamic air, allowing a high cooling power to be obtained.

According to a possible embodiment, when the frame is made of a composite material (i.e. when floor 15 and thus also the bottom panel 24 of floor 15 are made of a composite material), the bottom panel 24 of floor 15 may comprise a series of metal inserts (typically made of aluminum and glued to the remaining part of the bottom panel 24), each of which is arranged in contact with the lower surface of the support matrix 22 and has a thermal conductivity higher than the remaining part of the bottom panel 24. The function of the metal inserts is to increase the thermal conductivity at the support matrix 22 so as to allow a better cooling of the storage system 14.

According to the preferred embodiment shown in figures 4, 5 and 8, each chemical battery 18 comprises an electrochemical cell 19 having a cylindrical shape, and an outer shell 25, which is cylindrical in shape, houses in its inside the electrochemical cell 19 keeping the electrochemical cell 19 itself compressed, and is made of a material with a high mechanical strength (typically metal material such as steel or reinforced aluminum, but the use of composite materials such as carbon fiber is also contemplated).

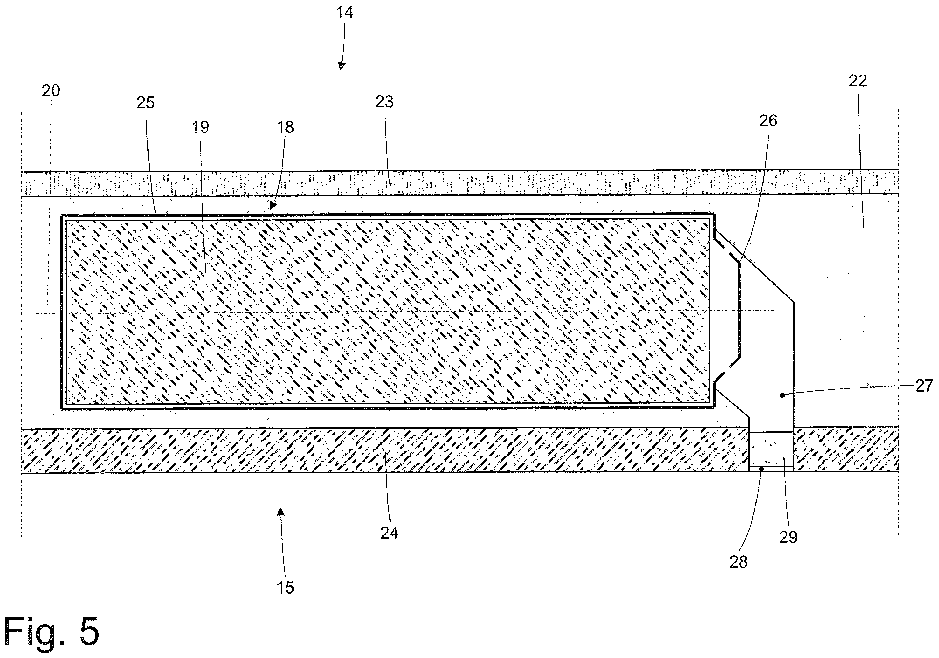

According to the preferred embodiment shown in figures 5 and 8, each chemical battery 18 is provided with safety valve 26 (i.e. a venting or overpressure valve) which is arranged at a base of the outer shell 25 and is adjusted to open up when the pressure into the outer shell 25 exceeds a predetermined safety pressure; in other words, the safety valve 26 is a mechanical maximum pressure valve which opens up when the pressure into the outer shell 25 is too high to prevent a violent explosion of the outer shell 25 itself. A lithium-ion electrochemical cell 19 is subject to a destructive phenomenon called *"thermal drift"* which is started by a short-circuit caused by the decomposition of the single components of the electrochemical cell 19 (typically subsequent to manufacturing defects) and is characterized by highly exothermic reactions which cause a sudden and high increase in temperatures and pressure (in case of *"thermal drift",* the temperature into the outer shell 25 may quickly reach several hundreds degrees). Thus, in case of *"thermal drift"* of a chemical battery 18, rather than having a violent explosion it is preferred to relieve the pressure/temperature through the safety valve 26 which autonomously opens up; once the safety valve 26 has autonomously opened up due to the pressure thrust into the outer shell 25, the so-called *"venting"* escapes from the safety valve 26, consisting of flames, high temperature gases, and fused lithium.

According to the preferred embodiment shown in figures 5 and 8, each chemical battery 18 is provided with an outlet duct 27, which connects the safety valve 26 to an evacuation opening 28 which is preferably obtained through the bottom panel 24 of floor 15; the function of the outlet duct 27 is to collect and channel the *"venting"* to bring the *"venting"* away from the other chemical batteries 18 which are thus preserved (in fact, it is imperative to prevent a chain reaction in which the *"thermal drift"* of a chemical battery 18 extends to the other adjacent chemical batteries 18 that are impinged by the *"venting"*). In fact, the *"venting"* produced by a chemical battery 18 that has gone into *"thermal drift"* is collected and conveyed by the outlet duct 27 to be vented outside vehicle 1 (and directly on the road surface) through the evacuation opening 28 obtained in the bottom panel 24 of floor 15; in this way, the *"venting"* produced by a chemical battery 18 that has gone in *"thermal drift"* does not affect the adjacent chemical batteries 18 in any way. Preferably, each evacuation opening 28 is closed by an adjusted plug 29, which is set to come off in the presence of a pressure that is higher than a predetermined threshold; the function of the adjusted plug 29 is to prevent water and dirt from entering through the evacuation opening 28 during the use of vehicle 1.

According to a preferred embodiment, the plastic material that makes up the support matrix 22 has a relatively low melting temperature (in the order of about 150-200 °C) so that if a chemical battery 18 goes in *"thermal drift",* the heat produced by the *"thermal drift"* causes (or may cause) a local melting of the support matrix 22; such local melting of the support matrix 22 reduces the heat transmission to the other chemical batteries 18 adjacent to the chemical battery 18 gone in *"thermal drift",* since it uses a part of the heat generated by the *"thermal drift"* as latent melting heat. Preferably, the plastic material that makes up the support matrix 22 has a relatively low melting temperature combined with a high latent melting heat.

Figures 3, 6 and 7 schematically show the electric connections of the chemical batteries 18; in particular, the chemical batteries 18 of a same row 21 are connected to each other in parallel, while the various rows 21 of chemical batteries 18 are typically connected to each other in series. As shown in figures 3, 6 and 7, each row 21 of chemical batteries 18 has a positive electric manifold 30 electrically connected to all the positive poles of the chemical batteries 18 of row 21 through corresponding conductors 31, and has a negative electric manifold 32 electrically connected to all the negative poles of the chemical batteries 18 of row 21 through corresponding conductors 33. In the embodiments of figures 3 and 6, each electric manifold 30 or 32 is associated with a single row 21 of chemical batteries 18, while in the embodiment of figure 7, each electric manifold 30 or 32 is associated with two adjacent rows 21 of chemical batteries 18 (obviously, the chemical batteries 18 in the two adjacent rows 21 are oriented in an opposite way to arrange the corresponding positive poles or the corresponding negative poles facing each other).

Preferably, the electric connections of the chemical batteries 18 are sized so that in case of crash causing a deformation of the storage system 14 and thus, as described above, a displacement of a part of the chemical batteries 18 from their natural housing (due to a mechanical collapse of the support matrix 22), the electric continuity between the displaced chemical batteries 18 and manifolds 30 and 32 is interrupted (i.e. conductors 31 and 33 are thorn). In this way, the chemical batteries 18 which are displaced automatically disconnect from the electric circuit, thus reducing the risk of short-circuits or electrocution; in other words, after the crash there are several chemical batteries 18 not connected to each other, thus individually having a moderate electric voltage (at most few tenth Volts that are not hazardous to human beings). By way of example, conductors 31 and 33 may be implemented so as to have a limited (adjusted) mechanical strength to break up in case of crash which causes a deformation of the storage system 14 and thus a displacement of a part of the chemical batteries 18 from their natural housing.

In the embodiment shown in figures 5 and 8, the chemical batteries 18 are embedded in the support matrix 22, i.e. the chemical batteries 18 are completely covered by the support matrix 22 itself; in this case, the support matrix 22 may be manufactured by co-molding the plastic material with the chemical batteries 18, i.e. the chemical batteries 18 (already provided with all the electric and safety connections) are arranged in a mold inside of which the plastic material is then fed (typically by injection), which plastic material can this completely cover the chemical batteries 18. In this embodiment, the support matrix 22 is directly formed about the chemical batteries 18 and after having implemented the chemical batteries 18 themselves. Moreover, in this embodiment, the chemical batteries 18 cannot be separated from the support matrix 22 but by breaking the support matrix 22 itself.

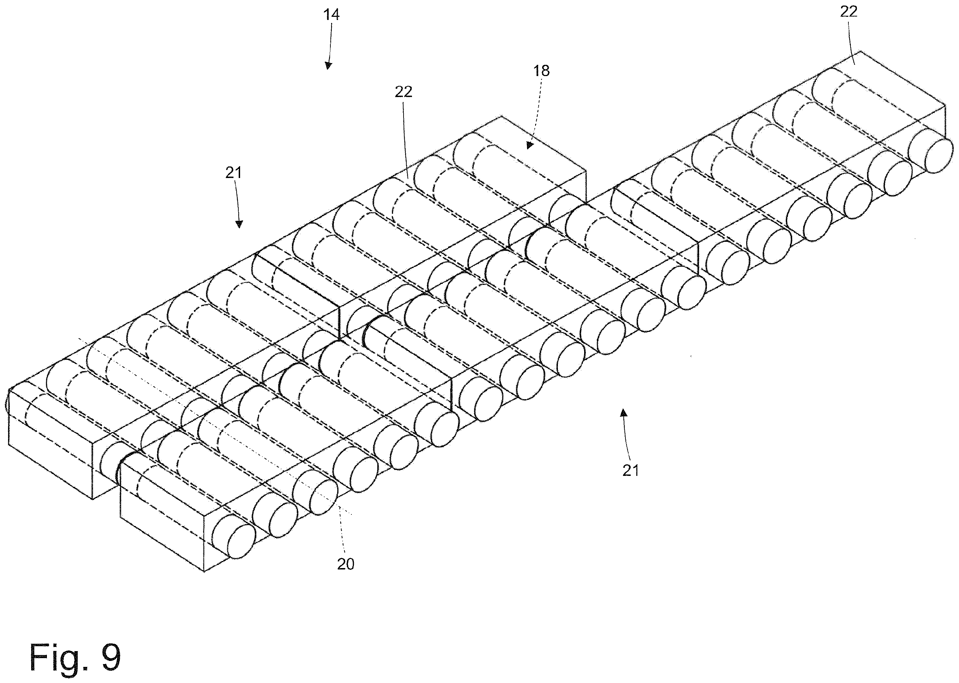

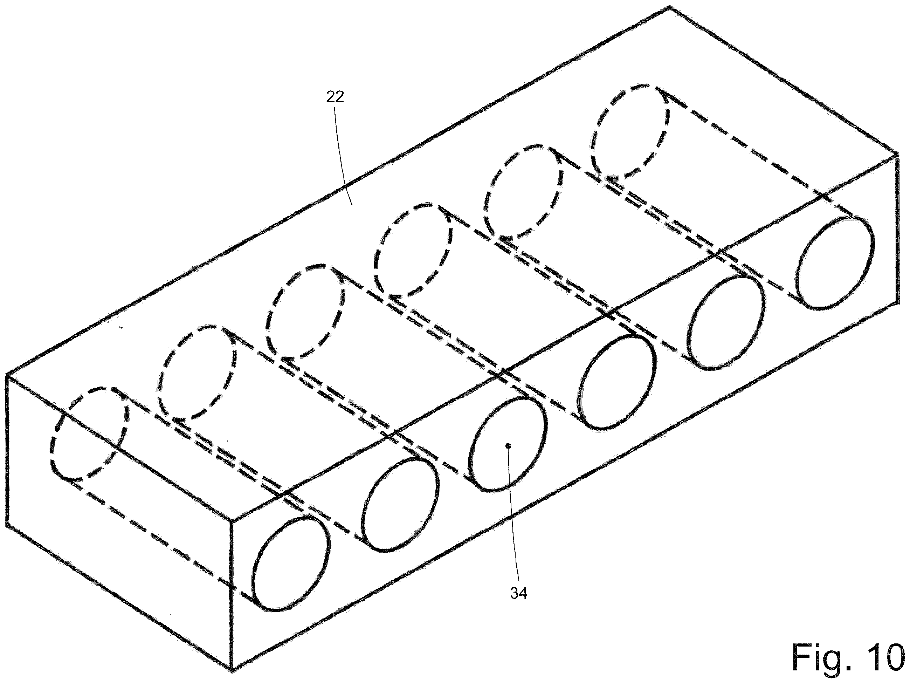

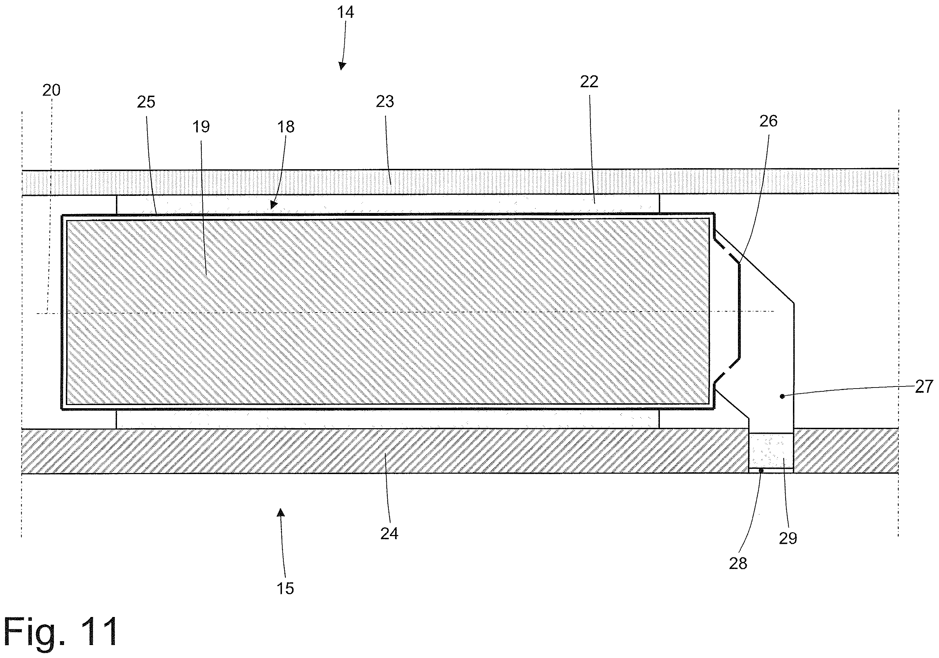

In the alternative embodiment shown in figures 9, 10 and 11, the support matrix 22 has the shape of a rectangular parallelepiped having a plurality of through holes 34, each of which is adapted to receive and contain a corresponding chemical battery 18 which is axially inserted into the through hole 34. In this embodiment, only a central portion of each chemical battery 18 is engaged by the support matrix 22 (i.e. is arranged into the support matrix 22 in the corresponding through hole 34), while the two end portions (in which the positive and negative electric poles are arranged) of each chemical battery 18 protrude from the support matrix 22. In this embodiment, the support matrix 22 is implemented separately and independently of the chemical batteries 18 (the "empty" support matrix 22 looks as shown in figure 10) and the chemical batteries 18 are inserted at a later time into the through holes 34 of the support matrix 22 which has been previously implemented. In this embodiment, the two end portions of each chemical battery 18 protrude from the support matrix 22; thus, the electric and safety connections of the chemical batteries 18 are implemented after inserting the chemical batteries 18 into the support matrix 22 since the end portions of each chemical battery 18 are completely accessible from the outside.

According to a preferred embodiment shown in figure 9, the support matrix 22 is not a single body which carries all the chemical batteries 18 of the pack of batteries, but is implemented in a modular way by arranging multiple modules (one of which is shown alone in figure 10) next to each other, each of which modules carries a predetermined number of chemical batteries 18 (six chemical batteries 18 in the example shown in figures 9 and 10). In other words, the support matrix 22 is composed in a modular way by the union of multiple modules which are identical to each other and each carry a same number of chemical batteries 18 (as an alternative, different types of modules differentiated from each other may be provided rather than a single type of module). In this way, it is easy to adapt the overall shape of the support matrix 22 to the (normally irregular) shape of container 17 of the storage system 14. According to a preferred embodiment, each module is attached to the bottom panel 24 (which makes up the support base on which the support matrix 22 lies) independently of the other modules, for example by gluing or by means of screws; in other words, the modules are individually attached to the bottom panel 24 (which makes up the support base on which the support matrix 22 lies).

The above-described system 14 for the storage of electric energy has several advantages.

Firstly, the above-described system 14 for the storage of electric energy is easy and cost-effective to be implemented even when it is manufactured in a limited number of pieces (for example in the order of few thousands pieces a year), since the above-described chemical batteries 18 are available on the market in large amounts and at moderate prices as they are used in most portable computers. In other words, the above-described chemical batteries 18 need not be specifically implemented for the storage system 14, as they are already available on the market; accordingly, the storage system 14 is simple and cost-effective to be implemented as it uses commercial components for its "core" (i.e. for the chemical batteries 18).

The above-described system 14 for the storage of electric energy has a moderate overall thickness (particularly when the chemical batteries 18 are horizontally arranged); in this way, the storage system 14 may be arranged at floor 15 even in a high performance sports road vehicle 1. By way of example, the above-described system 14 for the storage of electric energy may have an overall thickness of about 15-25 mm.

The above-described system 14 for the storage of electric energy has a moderate overall weight, since container 17 and the support matrix 22 are made of a plastic material having a relatively moderate overall strength (so as to collapse in case of crash).

The above-described system 14 for the storage of electric energy has a high intrinsic safety, since it has a large number of chemical batteries 18 (even several hundreds) of small size (if compared to a conventional chemical battery for motor traction), each of which is provided with an autonomous mechanical protection (the outer shell 25 made of steel or the like) having a high strength. Thus, in case of crash causing a deformation of the storage system 14, container 17 and the support matrix 22 housing the chemical batteries 18 collapse (break up), but the single chemical batteries 18 remain substantially intact since they are displaced due to the collapse of the support matrix 22 without being subjected to deformations. In other words, the storage system 14 is an easily deformable structure (i.e. which gets deformed under mechanical stress without offering a significant resistance) in which the chemical batteries 18 are inserted, each of which is provided with an autonomous mechanical protection (the outer shell 25 made of steel or the like) having a high strength; in case of crash causing a deformation of the storage system 14, the chemical batteries 18 are displaced due to the collapse of container 17 and of the support matrix 22 but are not deformed (i.e. they are not subjected to very high mechanical stresses). On the contrary, a traditional storage system has a low number (few units) of large sized chemical batteries which are mechanically protected by means of an outer metal enclosure having a high mechanical strength which encloses all the chemical batteries; in a traditional storage system of this type, in case of crash causing a deformation of the storage system, the chemical batteries get deformed and are thus destroyed.

As mentioned above, the above-described system 14 for the storage of electric energy has a large number of chemical batteries 18 (even several hundreds) of small size (if compared to a conventional chemical battery for motor traction), each of which is provided with an autonomous mechanical protection (the outer shell 25 made of steel) having a high strength. In this way, each chemical battery 18 has a relatively moderate stored energy (if compared to a conventional chemical battery for motor traction) and therefore, it is much easier to manage and restrain the possible "thermal drift" of a single chemical battery 18.

Thanks to the high intrinsic safety of the above-described storage system 14, in the above-described system 14 for the storage of electric energy the chemical batteries 18 can use lithium-ion ("Li-Ion") electrochemical cells 19 which have one of the best power-weight ratios, no memory effect, and a slow loss of the charge when not in use.

## Claims

1. A method for implementing a system (14) for the storage of electric energy for a vehicle (1) with electric propulsion; the storage system (14) comprises:
a pack of chemical batteries (18), which are connected to each other in series and/or in parallel, comprise respective electrochemical cells (19) and each of which has a cylindrical shape having a central symmetry axis (20); and
a support matrix (22) made of a plastic material and having a parallelepiped shape, inside of which the chemical batteries (18) are arranged;
the method comprises the steps of:
implementing the support matrix (22) separately and independently of the chemical batteries (18) so as to form an empty support matrix (22) having a plurality of through holes (34), each of which is adapted to receive and contain a corresponding chemical battery (18);
axially inserting each chemical battery (18) into a corresponding through hole (34) of the support matrix (22) so that only a central portion of the chemical battery (18) is engaged by the support matrix (22), while the two end portions of each chemical battery (18) protrude from the support matrix (22); and
implementing the electric connections of the chemical batteries (18) after having inserted the chemical batteries (18) into the through holes (34) of the support matrix (22);
the method is **characterized in that** it comprises the further steps of:
housing the pack of chemical batteries (18) embedded in the support matrix (22) in a container (17); and
adjusting the mechanical strength of the container (17) and of the support matrix (22) so that the mechanical strength of the container (17) and of the support matrix (22) is lower than the mechanical strength of the single chemical batteries (18) and, in case of crash, the container (17) and the support matrix (22) collapse by getting deformed while the single chemical batteries (18) remain entire and are displaced with respect to the container (17) and to the support matrix (22).

2. A method according to claim 1, wherein the support matrix (22) is made of a plastic material, which is thermally conductive and electrically insulating.

3. A method according to claims 1 or 2 and comprising a cooling plate (23), which lies on a surface of the support matrix (22) and can be thermally connected to a cooling system, so as to evacuate the heat produced by the chemical batteries (18).

4. A method according to claim 1, 2 or 3 wherein the plastic material that makes up the support matrix (22) has a melting temperature lower than the temperature generated by a chemical battery (18) in *"thermal drift",* so that the heat produced by the *"thermal drift"* of a chemical battery (18) causes a local melting of the support matrix (22).

5. A method according to any of the claims from 1 to 4, wherein:
each chemical battery (18) is provided with a safety valve (26), which is arranged at a base; and
each chemical battery (18) is provided with an outlet duct (27), which connects the safety valve (26) to an evacuation opening (28).

6. A method according to claim 5, wherein the evacuation opening (28) is closed by an adjusted plug (29), which is set to come off in the presence of a pressure that is higher than a predetermined threshold.

7. A method according to claim 6, wherein the pack of chemical batteries (18) can lie on a support panel (24), through which through holes are obtained, which make up the evacuation openings (28).

8. A method according to claim 7, wherein the support panel (24) makes up part of a floor of the vehicle (1).

9. A method according to any of the claims from 1 to 8 and comprising the further steps of:
implementing a plurality of modules of the support matrix (22) made of plastic material, each of which has a parallelepiped shape and contains a corresponding group of chemical batteries (18) arranged in as many through holes; and
attaching multiple modules by arranging the modules next to each other for forming the overall support matrix (22).

10. A method according to claim 9 and comprising the further step of individually attaching, i.e. independently of the other modules, each module to a support panel (24) on which the support matrix (22) lies.

11. A method according to any of the claims from 1 to 10, wherein:
the vehicle (1) has a longitudinal direction (L), which is parallel to the direction of the rectilinear motion, and a transverse direction (T), which is perpendicular to the longitudinal direction (L); and
the storage system (14) is shaped so as to be fitted inside the vehicle (1) in such a way that the chemical batteries (18) are horizontally arranged and the central symmetry axis (20) of each chemical battery (18) is not parallel to the longitudinal direction (L) of the vehicle (1) neither to the transverse direction (T) of the vehicle (1).

## Patentansprüche

1. Verfahren zur Implementierung eines Systems (14) zur Speicherung von Elektroenergie für ein Fahrzeug (1) mit Elektroantrieb; wobei das Speichersystem (14) aufweist:
einen Satz chemischer Batterien (18), die in Reihe und/oder parallel miteinander verbunden sind, jeweilige elektrochemische Zellen (19) aufweisen und von denen jede eine Zylinderform mit einer Mittelsymmetrieachse (20) hat; und
eine aus einem Kunststoffmaterial hergestellte und parallelepipedförmige Stützmatrix (22), innerhalb derer die chemischen Batterien (18) angeordnet sind;
wobei das Verfahren die Schritte aufweist:
Implementieren der Stützmatrix (22) getrennt und unabhängig von den chemischen Batterien (18), um eine leere Stützmatrix (22) mit mehreren Durchgangslöchern (34) zu bilden, von denen jedes geeignet ist, eine entsprechende chemische Batterie (18) aufzunehmen und zu enthalten;
axiales Einführen jeder chemischen Batterie (18) in ein entsprechendes Durchgangsloch (34) der Stützmatrix (22), so dass nur ein Mittelabschnitt der chemischen Batterie (18) durch die Stützmatrix (22) erfasst wird, während die beiden Endabschnitte jeder chemischen Batterie (18) aus der Stützmatrix (22) vorstehen; und
Implementieren der elektrischen Verbindungen der chemischen Batterien (18) nach Einführen der chemischen Batterien (18) in die Durchgangslöcher (34) der Stützmatrix (22);
wobei das Verfahren **dadurch gekennzeichnet ist, dass** es ferner die Schritte aufweist:
Unterbringen des Satzes chemischer Batterien (18), die in der Stützmatrix (22) eingebettet sind, in einem Behälter (17); und
Einstellen der mechanischen Festigkeit des Behälters (17) und der Stützmatrix (22), so dass die mechanische Festigkeit des Behälters (17) und der Stützmatrix (22) niedriger als die mechanische Festigkeit der einzelnen chemischen Batterien (18) ist und bei Aufprall der Behälter (17) und die Stützmatrix (22) durch Verformung kollabieren, während die einzelnen chemischen Batterien (18) intakt bleiben und im Hinblick auf den Behälter (17) und auf die Stützmatrix (22) verschoben werden.

2. Verfahren nach Anspruch 1, wobei die Stützmatrix (22) aus einem Kunststoffmaterial hergestellt ist, das wärmeleitend und elektrisch isolierend ist.

3. Verfahren nach Anspruch 1 oder 2 und mit einer Kühlplatte (23), die auf einer Oberfläche der Stützmatrix (22) liegt und mit einem Kühlsystem thermisch verbunden sein kann, um die durch die chemischen Batterien (18) erzeugte Wärme abzuführen.

4. Verfahren nach Anspruch 1, 2 oder 3, wobei das Kunststoffmaterial, das die Stützmatrix (22) bildet, eine Schmelztemperatur hat, die niedriger als die durch eine chemische Batterie (18) bei "Wärmedrift" erzeugte Temperatur ist, so dass die durch "Wärmedrift" einer chemischen Batterie (18) erzeugte Wärme lokales Schmelzen der Stützmatrix (22) bewirkt.

5. Verfahren nach einem der Ansprüche 1 bis 4, wobei:
jede chemische Batterie (18) mit einem Sicherheitsventil (26) versehen ist, das an einer Basis angeordnet ist; und
jede chemische Batterie (18) mit einem Auslasskanal (27) versehen ist, der das Sicherheitsventil (26) mit einer Evakuierungsöffnung (28) verbindet.

6. Verfahren nach Anspruch 5, wobei die Evakuierungsöffnung (28) durch einen eingestellten Stopfen (29) verschlossen ist, der so beschaffen ist, dass er sich in Gegenwart eines Drucks löst, der höher als ein vorbestimmter Schwellwert ist.

7. Verfahren nach Anspruch 6, wobei der Satz chemischer Batterien (18) auf einem Stützpaneel (24) liegen kann, durch das Durchgangslöcher erhalten sind, die die Evakuierungsöffnungen (28) bilden.

8. Verfahren nach Anspruch 7, wobei das Stützpaneel (24) Teil eines Bodens des Fahrzeugs (1) bildet.

9. Verfahren nach einem der Ansprüche 1 bis 8 und ferner mit den Schritten:
Implementieren mehrerer Module der aus Kunststoffmaterial hergestellten Stützmatrix (22), von denen jedes parallelepipedförmig ist und eine entsprechende Gruppe chemischer Batterien (18) enthält, die in genau so vielen Durchgangslöchern angeordnet sind; und
Anbringen mehrerer Module durch Anordnen der Module nebeneinander zum Bilden der gesamten Stützmatrix (22).

10. Verfahren nach Anspruch 9 und ferner mit dem Schritt: individuelles Anbringen, d. h. unabhängig von den anderen Modulen, jedes Moduls an einem Stützpaneel (24), auf dem die Stützmatrix (22) liegt.

11. Verfahren nach einem der Ansprüche 1 bis 10, wobei:
das Fahrzeug (1) eine Längsrichtung (L), die parallel zur Richtung der geradlinigen Bewegung ist, und eine Querrichtung (T) hat, die senkrecht zur Längsrichtung (L) ist; und
das Speichersystem (14) so geformt ist, dass es innerhalb des Fahrzeugs (1) so eingepasst wird, dass die chemischen Batterien (18) horizontal angeordnet sind und die Mittelsymmetrieachse (20) jeder chemischen Batterie (18) weder zur Längsrichtung (L) des Fahrzeugs (1) noch zur Querrichtung (T) des Fahrzeugs (1) parallel ist.

## Revendications

1. Procédé pour mettre en oeuvre un système (14) pour le stockage d'énergie électrique pour un véhicule (1) à propulsion électrique ; le système de stockage (14) comprend :
un bloc de batteries chimiques (18) qui sont raccordées entre elles en série et/ou en parallèle, comprend des éléments électrochimiques (19) respectifs et dont chacun à une forme cylindrique avec un axe de symétrie central (20) ; et
une matrice de support (22) réalisée avec une matière plastique et ayant une forme parallélépipède, à l'intérieur de laquelle les batteries chimiques (18) sont agencées ;
le procédé comprend les étapes de :
mise en oeuvre de la matrice de support (22) séparément et indépendamment des batteries chimiques (18) afin de former une matrice de support vide (22) ayant une pluralité de trous débouchants (34), dont chacun est adapté pour recevoir et contenir une batterie chimique (18) correspondante,
insertion axialement de chaque batterie chimique (18) dans un trou débouchant (34) correspondant de la matrice de support (22) de sorte que seule une partie centrale de la batterie chimique (18) est mise en prise par la matrice de support (22), alors que les deux parties d'extrémité de chaque batterie chimique (18) font saillie de la matrice de support (22) ; et
mise en oeuvre des connexions électriques des batteries chimiques (18) après avoir inséré les batteries chimiques (18) dans les trous débouchants (34) de la matrice de support (22) ;
le procédé est **caractérisé en ce qu'**il comprend les étapes supplémentaires de :
logement du bloc de batteries chimiques (18) encastré dans la matrice de support (22) dans un contenant (17) ; et
ajustement de la résistance mécanique du contenant (17) et de la matrice de support (22) de sorte que la résistance mécanique du contenant (17) et de la matrice de support (22) est inférieure à la résistance mécanique des batteries chimiques (18) seules et, en cas de collision, le contenant (17) et la matrice de support (22) s'affaissent en se déformant alors que les batteries chimiques (18) seules restent entières et sont déplacées par rapport au contenant (17) et à la matrice de support (22).

2. Procédé selon la revendication 1, dans lequel la matrice de support (22) est réalisée avec une matière plastique, qui est thermiquement conductrice et électriquement isolante.

3. Procédé selon les revendications 1 ou 2 et comprenant une plaque de refroidissement (23) qui est sur une surface de la matrice de support (22) et peut être thermiquement raccordée à un système de refroidissement, afin d'évacuer la chaleur produite par les batteries chimiques (18).

4. Procédé selon la revendication 1, 2 ou 3, dans lequel la matière plastique qui compose la matrice de support (22) a une température de fusion inférieure à la température générée par la batterie chimique (18) en « *dérive thermique* », de sorte que la chaleur produite par la *« dérive thermique »* d'une batterie chimique (18) provoque la fusion locale de la matrice de support (22).

5. Procédé selon l'une quelconque des revendications 1 à 4, dans lequel :
chaque batterie chimique (18) est prévue avec une valve de sécurité (26) qui est agencée au niveau d'une base ; et
chaque batterie chimique (18) est prévue avec un conduit de sortie (27) qui raccorde la valve de sécurité (26) à une ouverture d'évacuation (28).

6. Procédé selon la revendication 5, dans lequel l'ouverture d'évacuation (28) est fermée par un bouchon ajusté (29), qui est placé pour se détacher en présence d'une pression qui est supérieure à un seuil prédéterminé.

7. Procédé selon la revendication 6, dans lequel le bloc de batteries chimiques (18) peut être sur un panneau de support (24), à travers lequel des trous débouchants sont obtenus, qui composent les ouvertures d'évacuation (28).

8. Procédé selon la revendication 7, dans lequel le panneau de support (24) fait partie d'un plancher du véhicule (1).

9. Procédé selon l'une quelconque des revendications 1 à 8 et comprenant les étapes supplémentaires de :
mise en oeuvre d'une pluralité de modules de matrice de support (22) réalisés avec une matière plastique, dont chacun a une forme parallélépipède et contient un groupe correspondant de batteries chimiques (18) agencées dans autant de trous débouchants ; et
fixation de plusieurs modules en agençant les modules les uns à côté des autres pour former la matrice de support (22) globale.

10. Procédé selon la revendication 9 et comprenant l'étape supplémentaire de fixation individuellement, c'est-à-dire indépendamment des autres modules, de chaque module à un panneau de support (24) sur lequel se trouve la matrice de support (22).

11. Procédé selon l'une quelconque des revendications 1 à 10, dans lequel :
le véhicule (1) a une direction longitudinale (L), qui est parallèle à la direction du mouvement rectiligne, et une direction transversale (T) qui est perpendiculaire à la direction longitudinale (L) ; et
le système de stockage (14) est formé afin d'être monté à l'intérieur du véhicule (1) de sorte que les batteries chimiques (18) sont agencées horizontalement et que l'axe de symétrie central (20) de chaque batterie chimique (18) n'est pas parallèle à la direction longitudinale (L) du véhicule (1) ni à la direction transversale (T) du véhicule (1).
